# EUROPEAN PATENT SPECIFICATION

(11) **EP 2 597 699 B1**
(45) Date of publication and mention of the grant of the patent: **04.11.2015**
(21) Application number: 11425284.4
(22) Date of filing: 25.11.2011
(51) Int. Cl.: H01M 2/04, H01M 2/12

(54) **A double cover for storage batteries**
Doppelte Abdeckung für Speicherbatterien
Double couvercle pour batteries de stockage

(43) Date of publication of application: 29.05.2013
(73) Proprietor: Industrie Composizione Stampati S.r.L., Centro Aziendale Quercete N.A. (IT)
(72) Inventor: Maraschi, Marco, 26010 Chieve (Cremona) (IT); Fossati, Giuseppe, 24050 Mozzanica (Bergamo) (IT)
(74) Representative: Baldi, Claudio

(56) References cited:
- EP-A1- 0 503 264
- WO-A1-2010/101536
- DE-A1- 10 257 918
- US-A- 5 843 593

## Description

The present invention relates to a cover for a storage battery, comprising:
- a substantially planar main closure element, suitable for closing a battery case, in which a plurality of charging holes are provided, intended to provide access to the inside of the battery case,
- a secondary closure element, mounted on the main element for closing the holes of the main element of the cover, and
- at least one conduit, provided in at least one of said main and secondary elements and in flow communication with said holes, which is arranged for discharging the gases generated inside the case of said battery,
wherein said main and secondary elements together form a box-like structure defining a chamber in flow communication with the holes, and inside which the main and secondary elements are connected to each other by a plurality of baffles extending substantially perpendicularly with respect to the plane of extension of the main element, and are arranged in such a way as to define a labyrinth which connects said holes in the main element to said gas discharge conduit;
wherein said plurality of baffles comprises a plurality of transverse walls interposed between each hole and the adjacent hole, and which extend in such a way as to subdivide the chamber into a plurality of sub-chambers, each sub-chamber thus containing a respective hole of the plurality of holes, and
wherein the sub-chambers are individually in flow communication with a collecting channel which communicates with the gas discharge conduit.

A cover of this type is described for example in DE 102 57 918.

As is known, motor vehicle manufacturers long ago switched to using "maintenance-free" batteries, the feature of which is that they do not require topping up with distilled water during their entire service life.

The reduction in water consumption is obtained by the use of alloys for the grilles of PbCa and of materials of greater purity which reduce the development of gases in the battery charging stages.

The design of the covers has also evolved in order to allow good separation of the electrolyte from the gases before the latter reach the outlet hole.

Moreover, for reasons of safety of the skilled vehicle assembly operators, those trained in the maintenance thereof and the final users (drivers and passengers), what is demanded of the batteries is a perfect seal against the escape of the sulphuric acid solution, which is highly corrosive.

The checking of this seal is carried out by way of specific laboratory tests (handling, roll-over, overpressure, tilting, vibrations, thermal cycles) which simulate the severe conditions in which SLI (Starting, Lighting, Ignition) batteries may be used.

US 5 843 593 discloses a cover for a storage battery according to the preamble of claim 1.

It is an aim of the present invention to provide a cover with a new horizontal labyrinth configuration, which is capable of fulfilling the aforementioned requirements.

According to the invention, this aim is achieved by a cover according to claim 1.

In the cover according to the invention, the separation between the electrolyte and the gases which develop in the battery in the charging stage is obtained by means of a labyrinth with horizontal profile which allows the gases to reach the outlet in the stages of normal operation, while preventing the electrolyte from reaching the outlet also in the case where the battery is placed on one of its sides or turned upside down. The particular arrangement of the collection channel makes it possible in particular to withstand by a wide margin the roll-over test in which the battery, in an over-charged stage, at a temperature of 40°C, is placed on its sides and turned upside down and must not show leaks for at least 2 minutes.

Other features and advantages of the invention will become clear from the following detailed description, given with reference to the appended drawings, provided purely by way of non-limiting example, wherein:

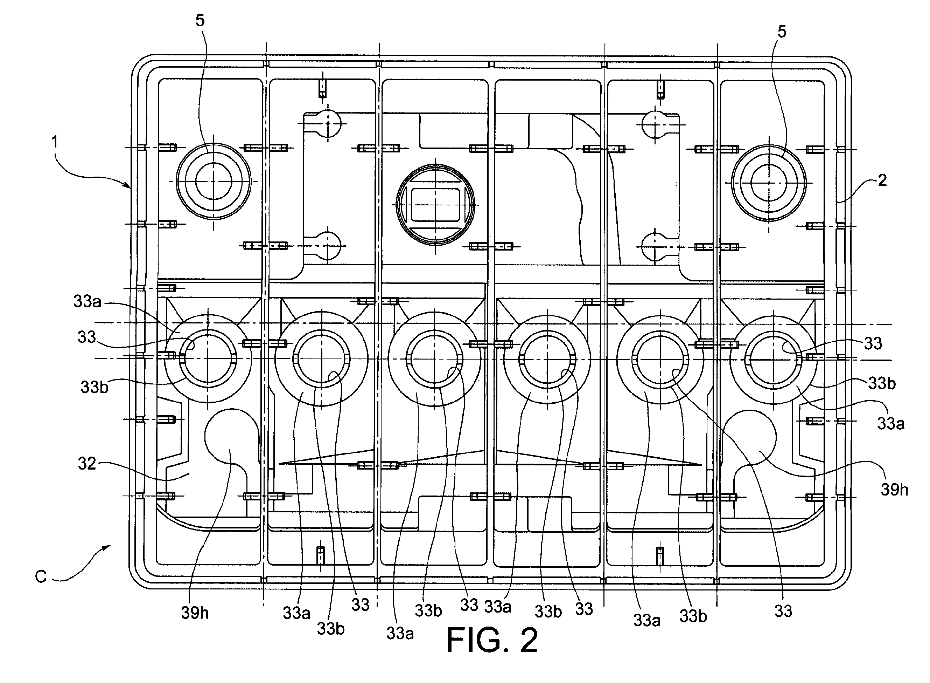

- Figures 1 and 2 are plan views, respectively from above and from below, of a cover for a storage battery according to the invention;
- Figures 3 and 4 are views, respectively in front and side elevation, of the cover of Figure 1; and
- Figures 5 and 6 are sectional views of the cover of Figure 1, respectively along the line V-V and along the line VI-V 1 of that figure.

In the appended drawings reference is made, for the sake of simplicity, to a cover for normal SLI batteries, generally formed of six cells in series; it is however clear that the present invention is equally applicable to batteries formed of any number of cells in series, and also to batteries intended for uses other than that of the SLI type.

In the drawings, a cover for a storage battery is indicated as a whole by C.

In the form of embodiment illustrated by way of example, the cover or covering assembly C comprises a main cover 1, generally rectangular, which has on its periphery a rim or flange 2 intended to be coupled in a sealed manner to the upper edge of a battery case, not illustrated.

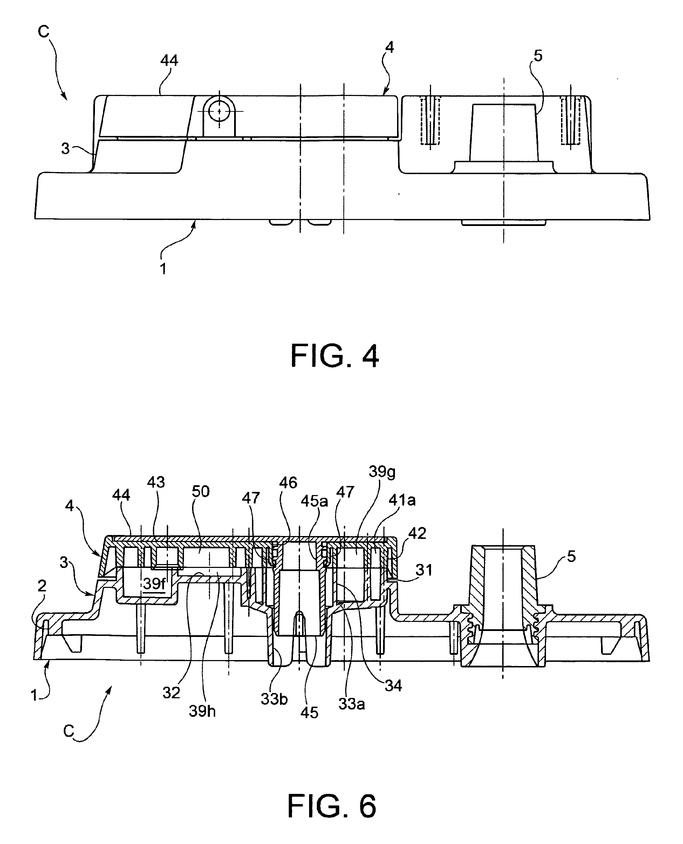

As can be seen in particular in Figures 4 and 6, in the form of embodiment illustrated, the cover 1 has a raised portion 3, on which is mounted a secondary cover 4, both having a substantially rectangular shape in plan view. Two tubular elements 5 extend from the lower part of the cover, close to the raised portion of the cover, defining passages or seats for the positioning of respective poles of the battery.

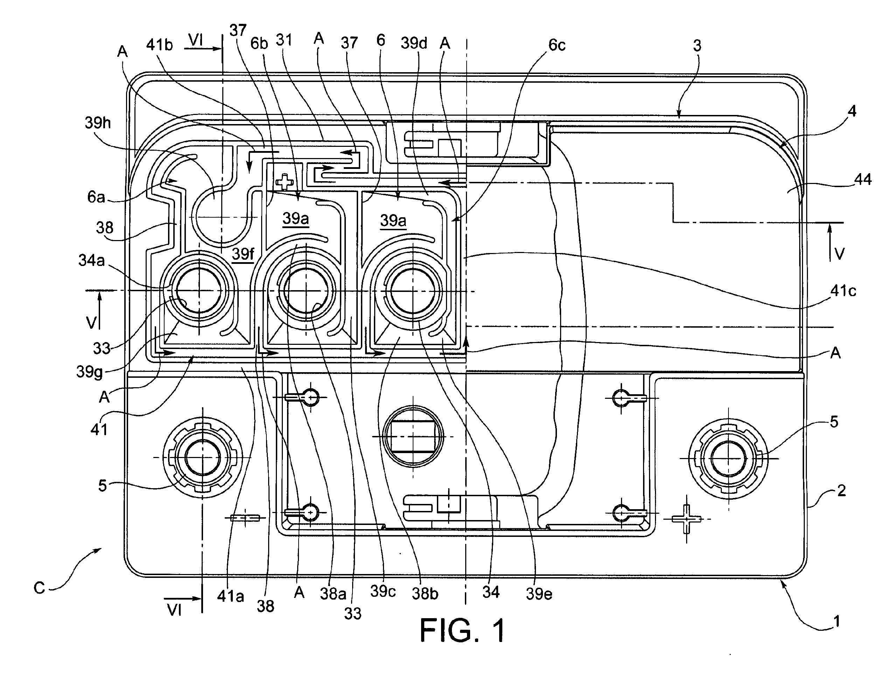

The secondary cover 4 with the raised portion 3 of the main cover 1 forms a box-like structure, in which the secondary cover 4 substantially forms an upper half-shell and the raised portion 3 forms a lower half-shell, which are connected to each other for example by means of heat-welding and define an inner chamber 6 for the collection of the gases (illustrated in its lower part in Fig. 1, in which half of the secondary cover 4 has been removed). The chamber 6 has an approximately rectangular shape in plan view, having a middle portion of reduced width.

The main cover 1 and the secondary cover 4 are advantageously produced by moulding plastics materials.

The raised portion or lower half-shell 3 of the main cover 1 is surrounded by a peripheral wall 31, extending vertically from the body of the cover 1. Within the portion defined by the wall 31 the raised portion 3 has a bottom wall 32, arranged at a substantially elevated level with respect to the remaining part of the cover 1. In the bottom wall 32 a plurality of aligned holes 33 are provided, arranged in a manner corresponding to the cells of the battery (not illustrated) intended to be closed by the cover 1. The holes 33 have a funnel shape, with a slightly inclined wall portion 33a, which extends downwards from the bottom wall 32 of the raised portion 3, and a substantially vertical wall portion 33b, which extends downwards from the slightly inclined wall portion 33a.

Arranged around each hole 33 is a substantially circumferential wall 34. In the form of embodiment illustrated, the circumferential wall 34 extends substantially vertically from the slightly inclined wall portion 33a of the hole 33 and is directly facing the hole 33.

In the circumferential wall 34 a notch or passage 34a is provided, which places the hole 33 in flow communication with the main chamber 6.

Inside the chamber 6 there also extend, from the bottom wall 32 of the raised portion 3, a plurality of dividing walls or baffles.

In particular, transverse walls 37 are interposed between each hole 33 and the adjacent hole 33, and extend in a transverse direction with respect to the chamber 6 in such a way as to connect opposite sides of the peripheral wall 31, thus sub-dividing the main chamber 6 into sub-chambers 6a, 6b, 6c (only three sub-chambers being visible in Figure 1; the other three hidden sub-chambers are mirror-images thereof). In each sub-chamber 6a, 6b, 6c there is a respective hole 33. In terms of structure for fluid flows, the central sub-chambers 6b, 6c are substantially identical to each other, and are different from the peripheral chamber 6a.

Inside each sub-chamber 6a, 6b, 6c other dividing walls or baffles form a connecting conduit 38, which is arranged alongside the respective hole 33 of the sub-chamber and connects the sub-chamber to a collection channel for the gases, which is described hereinafter, and a winding flow path which places the connecting conduit 38 in indirect flow communication with the respective hole 33.

In each central sub-chamber 6b, 6c the connecting conduit 38 comprises an arc-shaped portion 38a extending round the hole 33 (and one wall of which is provided by a portion of the circumferential wall 34 of the hole), and the winding flow path comprises an accumulation space 39a onto which opens the arc-shaped section 38a of the connecting conduit 38, a hole side space 39b facing the hole 33 (via the passage 34a provided on the circumferential wall 34), and arranged at the opposite end of the sub-chamber with respect to the accumulation space 39a, and a lateral conduit 39c arranged on the opposite side of the sub-chamber with respect to the connecting conduit 38, which constitutes the only way of communication between the accumulation space 39a and the hole side space 39b, and opens into these via respective connecting ends 39d, 39e arranged in an elbow with respect to the lateral conduit 39c.

Inside each peripheral sub-chamber 6a the connecting conduit 38 extends along the sub-chamber as far as the opposite end with respect to the hole 33, and the winding flow path comprises a winding conduit 39f and a hole side space 39g facing the hole 33 (via the passage 34a provided on the circumferential wall 34). The winding conduit 39f extends between the hole 33 and an outlet chamber 39h, the function of which will be explained hereinafter. The connecting conduit 38 opens onto one end of the winding conduit 39f, the other end of the winding conduit 39f being connected in the form of an elbow to the hole side space 39g.

The sub-chambers 6a, 6b, 6c are individually in flow communication with a collection channel 41, by way of the respective connecting conduits 38.

The collection channel 41 comprises a first and a second longitudinal channel portion 41a, 41b, which extend along opposite sides of the chamber 6, and a transverse channel portion 41c which extends along the centre line of the chamber 6 (between two adjacent sub-chambers) and interconnects the first and second longitudinal channel portions 41a, 41b. The first longitudinal channel portion 41a provides flow communication with the sub-chambers 6a, 6b, 6c, inasmuch as the respective connecting conduits 38 of those sub-chambers open directly onto the first channel portion; on its side, the second longitudinal channel portion 41b provides flow communication with a discharge conduit for the gases (which will be described hereinafter), via the outlet chamber 39h which communicates with the second longitudinal channel portion 41b. In particular, the second longitudinal channel portion 41b defines a serpentine or zig-zag flow path along one side of the chamber 6 (in Figure 1 two consecutive bends can be seen which send the fluid in two directions opposed to each other). The zig-zag path is defined in the region of the point at which the chamber 6 has a stepped variation in width from the narrower middle part to the wider peripheral part.

The secondary cover or upper half-shell 4 has a peripheral wall 42, extending vertically from the body of the cover 4. Within the portion defined by the wall 42 the cover 4 has a bottom wall 43.

The secondary cover 4 further comprises a support plate 44 mounted on the secondary cover 4. From the support plate 44 there extends a plurality of tubular plugs 45, each having a body provided in one piece with the plate 44, which therefore carries the plugs 45 and connects them to one another. Each plug 45 is inserted into a respective through hole 46 of the secondary cover 4, an annular sealing member (not illustrated) which surrounds the plug being interposed between a base portion 45a of the plug and the secondary cover 4 and providing a seal therebetween.

The secondary cover 4 has in the region of each of the through holes 46 a plurality of resilient holding members 47 configured in the shape of a tooth which extend from the secondary cover 4 and engage the base portion 45a of the plugs (in the region of a circumferential groove provided on the base portion) in order to hold the support plate 44 against the secondary cover 4 in an axial direction.

Each tubular plug 45 is intended to be inserted into a respective complementary filling hole 33 of the raised portion 3 of the cover 1. The tubular plugs 45 are therefore arranged in a manner corresponding to the cells of the battery (not illustrated) intended to be closed by the cover 1.

The system described above makes it possible to obtain the following advantages:
- in the battery finishing stage no heat-welding apparatuses are necessary for rendering the inside of the cells inaccessible, apparatuses which require significant investment;
- a tamper-proof device is produced: any attempt to remove the plugs would in fact cause the breakage of the resilient holding members and therefore would irreparably damage the cover, rendering the battery unusable.

The specific manner in which the plugs 45 are arranged on the secondary cover 4 is not however essential to the purposes of the invention. According to a form of embodiment not illustrated, the plugs could even be absent; in this case the closure of each hole 33 would have to be ensured by a respective circumferential wall provided on the secondary cover 4, which in the state in which the secondary cover 4 is mounted on the raised portion of the main cover 1 would be connected in a sealed and aligned manner to the circumferential wall 34 of the raised portion 3. In this case the plate 44 would have to be heat-welded to the secondary cover 4.

In the state in which the secondary cover 4 is mounted on the raised portion of the main cover 1, the peripheral wall 42 of the cover 4 is connected in a sealed and aligned manner to the peripheral wall 31 of the raised portion 3.

From the bottom wall of the secondary cover 4 there additionally extends a plurality of dividing walls or baffles arranged in a configuration corresponding substantially to that of the dividing walls or baffles of the raised portion 3 of the main cover 1.

In the state in which the secondary cover 4 is mounted on the raised portion of the main cover 1, the dividing walls or baffles of the cover 4 are connected in a sealed and aligned manner to the respective dividing walls or baffles of the raised portion 3, in such a way as to close at the top the various spaces and conduits into which the labyrinth type chamber 6 is divided.

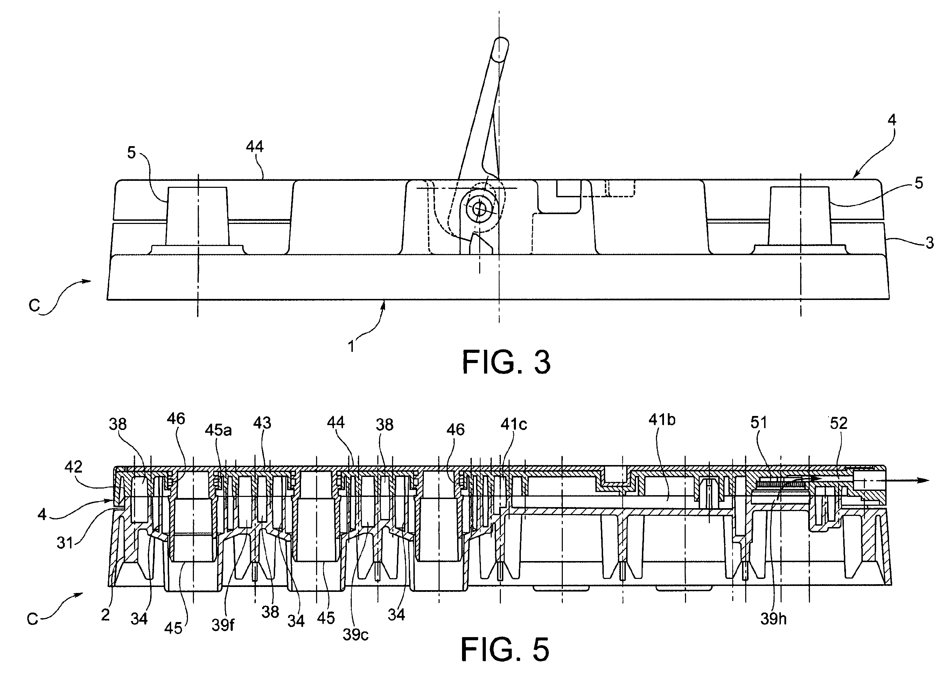

In the region of the outlet chamber 39h provided adjacent to each peripheral sub-chamber 6a, the secondary cover 4 has a seat 50 for the mounting, for example by means of ultrasonic welding, of a porous pad 51 of known type (illustrated only in Fig. 5), functioning as a flame-resistant element. In the bottom wall 42 of the cover 4 there is provided a discharge conduit for the gases 52 (visible in Fig. 5), which places the outlet chamber 39h in flow communication with the outside atmosphere, by way of the porous pad 51.

Overall, the dividing walls or baffles of the raised portion of the main cover 1 and the dividing walls or baffles of the secondary cover 4 together define a labyrinth type of structure, equipped with baffles arranged in such a way as to constrain the fluids which pass through it to follow a winding path.

The arrows A in Figs. 1 and 5 illustrate outlet paths for the gases generated inside the battery.

The gases pass through the space between each tubular plug 45 and the wall 33b of the corresponding hole 33, and emerge through the passages 34a of the circumferential walls 34.

The gases then pass through the labyrinth type structure, circulating round the circumferential walls 34 of the holes 33 and traversing the respective sub-chambers. They then pass firstly into the hole side space 39e of the respective sub-chamber, then through the corresponding winding conduit, and then pass through the corresponding connecting conduit 38. The gases then reach the collecting channel 41; first they pass through the first longitudinal channel portion 41a, then are diverted transversely through the transverse channel portion 41c disposed on the centre line of the chamber, and then diverted further along the second longitudinal channel portion 41b. The gases then pass inside the outlet chamber 39h, and can finally be discharged to the outside through the breather conduit 52.

In the chamber 6 according to the invention a horizontal labyrinth is thus created which makes it possible to incline the battery through 90° (with respect to the vertical position) on any one of its four sides, or even turn the battery upside down, without the electrolyte reaching within a short time the porous pads 51 placed in the gas discharge passages. In this way leakages of electrolyte are avoided or at least reduced in the event of improper handling or in the event of accidental inclination.

## Claims

1. A cover for a storage battery, comprising:
- a substantially planar main closure element (1), suitable for closing a battery case, in which a plurality of filling holes (33) are provided, intended to provide access to the inside of the battery case,
- a secondary closure element (4), mounted on the main element for closing the holes (33) of the main element of the cover, and
- at least one conduit (52), provided in at least one of said main and secondary elements and in flow communication with said holes, and which is arranged for discharging the gases generated inside the case of said battery,
wherein said main and secondary elements together form a box-like structure (3, 4) defining a chamber (6) in flow communication with the holes, and inside which the main and secondary elements are connected to each other by a plurality of baffles extending substantially perpendicularly with respect to the plane of extension of the main element, and arranged in such a way as to define a labyrinth which connects said holes in the main element to said gas discharge conduit;
wherein said plurality of baffles comprises a plurality of transverse walls (37) interposed between each hole (33) and the adjacent hole (33), and which extend so as to subdivide the chamber (6) into a plurality of sub-chambers (6a, 6b, 6c), each sub-chamber (6a, 6b, 6c) thus containing a respective hole of the plurality of holes (33), and
wherein the sub-chambers are individually in flow communication with a collecting channel (41) which communicates with the gas discharge conduit (52) and comprises a first and a second longitudinal channel portion (41a, 41b), which extend along opposite sides of the chamber, and a transverse channel portion (41c) which interconnects said first and second longitudinal channel portions, said first longitudinal channel portion providing flow communication with said sub-chambers and said second longitudinal channel portion providing flow communication with the gas discharge conduit via an outlet chamber (39) which communicates with the second longitudinal channel portion (41b), a connecting conduit (38) and a winding flow path being formed inside each sub-chamber, wherein the connecting conduit (38) is arranged alongside the respective hole (33) and opens directly onto the first channel portion (41a) of the collecting channel (41), and the winding flow path places the connecting conduit (38) in indirect flow communication with the respective hole (33),
**characterized in that**
the sub-chambers are individually in flow communication with the collecting channel (41), and
the transverse channel portion (41c) of the collecting channel extends along the centre line of the chamber.

2. A cover according to claim 1, wherein the second longitudinal channel portion (41b) defines a serpentine flow path along one side of the chamber (6).

3. A cover according to claim 1 or 2, wherein each sub-chamber (6a, 6b, 6c) is connected to the first longitudinal channel portion (41a) by a respective connecting conduit (38), arranged alongside the respective hole (33) of the sub-chamber (6a, 6b, 6c), and in indirect flow communication with the respective hole (33) via a winding flow path provided in the sub-chamber (6a, 6b, 6c).

4. A cover according to claim 3, wherein
inside each central sub-chamber (6b, 6c) of said plurality of sub-chambers
the hole (33) is surrounded by a circumferential wall (34), through which is provided a passage (34a) which places the hole (33) in communication with the sub-chamber (6b, 6c),
the connecting conduit (38) comprises an arc-shaped portion (38a) extending round the hole (33),
the winding flow path comprises an accumulation space (39a) onto which opens said arc-shaped portion of the connecting conduit (38), a hole side space (39c) facing the hole (33) via the passage (34a) of the circumferential wall (34), and arranged at the opposite end of the sub-chamber (6b, 6c) with respect to said accumulation space, and a lateral conduit (39c) arranged on the opposite side of the sub-chamber (6b, 6c) with respect to the connecting conduit (38), which constitutes the only way of communication between said accumulation space and hole side space, and opens thereinto via respective connecting ends (39d, 39e) arranged in an elbow with respect to the lateral conduit (39c).

5. A cover according to claim 3 or 4, wherein inside each peripheral sub-chamber (6a) of said plurality of sub-chambers
the hole (33) is surrounded by a circumferential wall (34), through which a passage (34a) is provided which places the hole (33) in communication with the sub-chamber (6a),
the connecting conduit (38) extends along the sub-chamber (6a) as far as its opposite end with respect to the hole (33),
the winding flow path comprises a winding conduit (39f) and a hole side space (39g) facing onto the hole (33) via the passage (34a) of the circumferential wall (34), said winding conduit extending between the hole (33) and an outlet chamber (39h) in flow communication with the gas discharge conduit (52), wherein the connecting conduit (38) opens onto one end of the winding conduit (39f), the other end of the winding conduit (39f) being connected as an elbow to the hole side space (39g).

6. A cover according to any one of the preceding claims, wherein on the secondary closure element (4) there is arranged a plurality of plugs (45), which are inserted into the charging holes (33) of the main element (1) of the cover,
wherein said secondary closure element (4) comprises a support plate (44) which carries said plugs and connects them to one another, the support plate being mounted on the secondary closure element,
wherein each plug (45) is inserted into a respective through hole (46) of the secondary closure element (4), an annular sealing member which surrounds the plug being interposed between a base portion (45a) of the plug and the secondary closure element (4) and providing a seal therebetween, and
wherein said secondary closure element has in the region of each of said through holes (46) a plurality of resilient holding members (47) configured as a tooth, which extend from the secondary closure element (4) and engage said base portion of the plugs in order to hold said support plate against said secondary closure element in an axial direction.

## Patentansprüche

1. Deckel für einen Akkumulator, umfassend:
- ein im Wesentlichen ebenes Hauptverschlusselement (1), das dazu geeignet ist, das Gehäuse eines Akkumulators zu verschließen, in dem mehrere Befüllungslöcher (33) herausgearbeitet sind, die dazu bestimmt sind, den Zugang zum Inneren des Akkumulatorgehäuses zu gewähren,
- ein zweites Verschlusselement (4), das auf dem Hauptelement montiert ist, um die Löcher (33) des Hauptelements des Deckels zu verschließen und
- mindestens eine Rohrleitung (52), die in mindestens einem aus dem Hauptelement und dem zweiten Element herausgearbeitet ist und in Fließverbindung mit den Löchern steht und zur Abführung der im Inneren des Akkumulatorgehäuses entstehenden Gase vorgesehen ist,
bei dem das Hauptelement zusammen mit dem zweiten Element eine kastenförmige Struktur (3, 4) bildet, die eine in Fließverbindung mit den Löchern stehende Kammer (6) begrenzt, in deren Innerem das Hauptelement und das zweite Element durch eine Vielzahl von Trennwänden miteinander verbunden sind, die sich im Wesentlichen senkrecht bezogen auf die Erstreckungsebene des Hauptelements erstrecken und derart angeordnet sind, dass sie ein Labyrinth definieren, das die Löcher des Hauptelements mit der Rohrleitung zur Abführung der Gase verbindet;
bei dem die Vielzahl von Trennwänden eine Vielzahl von Querwänden (37) umfasst, die jeweils zwischen einem Loch (33) und dem angrenzenden Loch (33) angebracht sind und sich derart erstrecken, dass die Kammer (6) in eine Vielzahl von Unterkammern (6a, 6b, 6c) unterteilt wird, wobei jede Unterkammer (6a, 6b, 6c) jeweils ein Loch der Vielzahl von Löchern (33) aufnimmt und
bei dem die Unterkammern einzeln in Fließverbindung mit einem Sammelkanal (41) stehen, der mit der Rohrleitung (52) zur Abführung der Gase verbunden ist und einen ersten sowie einen zweiten längslaufenden Kanalabschnitt (41 a, 41 b) umfasst, die sich längs der gegenüberliegenden Seiten der Kammer erstrecken, und einen querlaufenden Kanalabschnitt (41 c), der den ersten und den zweiten längslaufenden Kanalabschnitt miteinander verbindet, wobei der erste längslaufende Kanalabschnitt eine Fließverbindung mit den Unterkammern bildet, während der zweite längslaufende Kanalabschnitt eine Fließverbindung mit der Rohrleitung zur Abführung der Gase durch eine mit dem zweiten längslaufenden Kanalabschnitt (41 b) in Verbindung stehende Auslasskammer (39) bildet, wobei eine Verbindungsrohrleitung (38) und ein gewundener Fließverlauf in jeder Unterkammer gebildet werden, wobei die Verbindungsrohrleitung (38) längs des dazugehörigen Loches (33) angeordnet ist und sich direkt zum ersten Kanalabschnitt (41 a) des Sammelkanals (41) hin öffnet und der gewundene Fließverlauf die Verbindungsleitung (38) in indirekte Fließverbindung mit dem dazugehörigen Loch setzt,
**dadurch gekennzeichnet, dass**
die Unterkammern einzeln in Fließverbindung mit dem Sammelkanal (41) stehen und
der querlaufende Kanalabschnitt (41 c) des Sammelkanals sich längs der Mittellinie der Kammer ersteckt.

2. Deckel nach Anspruch 1, bei dem der zweite längslaufende Kanalabschnitt (41 b) einen serpentinenförmigen Fließverlauf längs einer Seite der Kammer (6) definiert.

3. Deckel nach Anspruch 1 oder 2, bei dem jede Unterkammer (6a, 6b, 6c) mit dem ersten längslaufenden Kanalabschnitt (41 a) durch eine dazugehörige Verbindungsrohrleitung (38) verbunden ist, die längs des dazugehörigen Loches (33) der Unterkammer (6a, 6b, 6c) angeordnet ist und über einen gewundenen, in der Unterkammer (6a, 6b, 6c) herausgearbeiteten Fließverlauf in indirekter Fließverbindung mit dem dazugehörigen Loch (33) steht.

4. Deckel nach Anspruch 3, bei dem
im Inneren einer jeden mittleren Unterkammer (6b, 6c) der Vielzahl von Unterkammern
das Loch (33) von einer peripheren Wand (34) umgeben ist, durch die ein Durchfluss (34a) herausgearbeitet ist, der das Loch (33) mit der Unterkammer (6b, 6c) in Verbindung setzt,
die Verbindungsrohrleitung (38) einen bogenförmigen Abschnitt (38a) umfasst, der sich rund um das Loch (33) erstreckt,
der gewundene Fließverlauf einen Sammelraum (39a) umfasst, in den der bogenförmige Abschnitt der Verbindungsrohrleitung (38) einmündet, einen lochseitigen Raum (39c), der dem Loch (33) durch den Durchfluss (34a) der peripheren Wand (34) gegenüberliegt und am entgegengesetzten Ende der Unterkammer (6b, 6c) bezogen auf den Sammelraum angeordnet ist, und eine seitliche Rohrleitung (39c), die auf der entgegengesetzten Seite der Unterkammer (6b, 6c) bezogen auf die Verbindungsrohrleitung (38) angeordnet ist, die den einzigen Verbindungsweg zwischen dem Sammelraum und dem lochseitigen Raum darstellt und in diese über jeweilige Verbindungsendstücke (39d, 39e) einmündet, die bezogen auf die seitliche Rohrleitung (39c) gekröpft angeordnet sind.

5. Deckel nach Anspruch 3 oder 4, bei dem im Inneren einer jeden peripheren Unterkammer (6a) der Vielzahl von Unterkammern
das Loch (33) von einer peripheren Wand (34) umgeben ist, durch die ein Durchfluss (34a) herausgearbeitet ist, der das Loch (33) mit der Unterkammer (6a) in Verbindung setzt,
die Verbindungsrohrleitung (38) sich längs der Unterkammer (6a) bis zum gegenüberliegenden Ende bezogen auf das Loch (33) erstreckt,
der gewundene Fließverlauf eine gewundene Rohrleitung (39f) und einen lochseitigen Raum (39g) umfasst, der dem Loch (33) durch den Durchfluss (34a) der peripheren Wand (34) gegenüberliegt, wobei die gewundene Rohrleitung sich zwischen dem Loch (33) und einer Auslasskammer (39h) in Fließverbindung mit der Rohrleitung (52) zur Abführung der Gase erstreckt, bei dem die Verbindungsrohrleitung (38) in ein Ende der gewundenen Rohrleitung (39f) einmündet und bei dem das andere Ende der gewundenen Rohrleitung (39f) mit dem lochseitigen Raum (39g) gekröpft verbunden ist.

6. Deckel nach einem der vorstehenden Ansprüche, bei dem auf dem zweiten Verschlusselement (4) eine Vielzahl von Stopfen (45) angeordnet sind, die in die Befüllungslöcher (33) des Hauptelements (1) des Deckels eingesteckt sind,
bei dem das zweite Verschlusselement (4) ein Trägerplatte (44) umfasst, die die Stopfen trägt und miteinander verbindet, wobei die Trägerplatte auf dem zweiten Verschlusselement angebracht ist,
bei dem jeder Stopfen (45) in ein dazugehöriges Durchgangsloch (46) des zweiten Verschlusselements (4) eingesteckt ist, wobei ein ringförmiges Abdichtungsorgan, das den Stopfen umgibt, zwischen einen Basisanteil (45a) des Stopfens und das zweite Verschlusselement (4) eingefügt ist und diese hierdurch abdichtet, und
bei dem das zweite Verschlusselement an jedem Durchgangsloch (46) eine Vielzahl von elastischen, zahnförmig ausgebildeten Halterungsorganen (47) aufweist, die sich von dem zweiten Verschlusselement (4) erstrecken und den Basisanteil der Stopfen in Eingriff nehmen, um die Trägerplatte gegen das zweite Verschlusselement in axiale Richtung zu halten.

## Revendications

1. Couvercle pour une batterie d'accumulateurs, comprenant :
- un élément de fermeture principal (1) planaire, apte à fermer un boîtier de batterie, dans lequel une pluralité d'orifices (33) est réalisée, lesdits orifices étant destinés à fournir l'accès à l'intérieur du boîtier de batterie,
- un élément de fermeture secondaire (4), installé sur ledit élément principal pour fermer les orifices (33) du dit élément principal du couvercle, et
- au moins un conduit (52), réalisé dans un moins l'un des dits éléments principal et secondaire et en communication d'écoulement avec lesdits orifices, prédisposé pour l'échappement des gaz générés à l'intérieur du boîtier de ladite batterie,
où lesdits éléments principal et secondaire forment ensemble une structure rectangulaire (3, 4) qui délimite une chambre (6) en communication d'écoulement avec lesdits orifices, à l'intérieur de laquelle lesdits éléments principal et secondaire sont reliés l'un l'autre par une pluralité de cloisons qui se déploient perpendiculairement par rapport au plan d'extension du dit élément principal, et disposées de manière telle à définir un labyrinthe qui relie lesdits orifices de l'élément principal au dit conduit d'échappement des gaz ;
où ladite pluralité de cloisons comprend une pluralité de parois transversales (37) interposées entre chaque orifice (33) et l'orifice (33) adjacent, lesquelles se déploient de manière telle à partager la chambre (6) dans une pluralité de sous-chambres (6a, 6b, 6c), chaque sous-chambre (6a, 6b, 6c) logeant ainsi un respectif orifice de la pluralité des orifices (33), et
où les sous-chambres sont individuellement en communication d'écoulement avec un canal de collecte (41) qui communique avec le conduit d'échappement des gaz (52) et comprend un premier et un second segment de canal longitudinal (41 a, 41 b), qui se déploient le long de côtés opposés de ladite chambre, et un segment de canal transversal (41 c) d'interconnexion entre lesdits premier et second segments de canal longitudinal, ledit premier segment de canal longitudinal fournissant une communication d'écoulement avec lesdites sous-chambres et ledit second segment de canal longitudinal fournissant une communication d'écoulement avec ledit conduit d'échappement des gaz, à travers une chambre externe (39) qui communique avec le second segment du canal longitudinal (41 b), un conduit de connexion (38) et un parcours d'écoulement tortueux étant formé dans chacune des sous-chambres, où le conduit de connexion (38) est disposé juxtaposé à l'orifice respectif (33) et s'ouvre directement sur ledit premier segment de canal (41 a) du canal de collecte (41), et le parcours d'écoulement tortueux met le conduit de connexion (38) en communication indirecte d'écoulement avec l'orifice respectif (33),
**caractérisé en ce que**
les sous-chambres sont individuellement en communication d'écoulement avec le canal de collecte (41), et
le segment de canal transversal (41 c) du canal de collecte se déploie le long de la ligne centrale de la chambre.

2. Couvercle selon la revendication 1, où ledit second segment de canal longitudinal (41 b) définit un parcours d'écoulement en serpentin le long d'un côté de ladite chambre (6).

3. Couvercle selon la revendication 1 ou 2, où chacune des sous-chambres (6a, 6b, 6c) est reliée au dit premier segment du canal longitudinal (41 a) moyennant un respectif conduit de connexion (38), disposé juxtaposé à l'orifice respectif (33) de la sous-chambre (6a, 6b, 6c), et en communication indirecte d'écoulement avec l'orifice respectif (33) à travers un parcours d'écoulement tortueux réalisé dans la sous-chambre (6a, 6b, 6c).

4. Couvercle selon la revendication 3, où
à l'intérieur de chaque sous-chambre centrale (6b, 6c) de ladite pluralité de sous-chambres, l'orifice (33) est entouré par une paroi de circonférence (34), dans laquelle un passage (34a) est réalisé pour mettre en communication l'orifice (33) avec la sous-chambre (6b, 6c),
le conduit de connexion (38) comprend un segment en arc (38a) qui se déploie autour de l'orifice (33),
le parcours d'écoulement tortueux comprend un compartiment d'accumulation (39a) sur lequel débouche ledit segment en arc du conduit de connexion (38), un compartiment côté orifice (39c) qui fait face à l'orifice (33) à travers le passage (34a) de la paroi de circonférence (34), et disposé à l'extrémité opposée de la sous-chambre (6b, 6c) par rapport au dit compartiment d'accumulation, et un conduit latéral (39c) disposé sur le côté opposé de la sous-chambre (6b, 6c) par rapport au conduit de connexion (38), ce dernier constituant la seule voie de communication entre lesdits compartiment d'accumulation et compartiment côté orifice, et débouche dans ceux-ci à travers les respectives extrémités de connexion (39d, 39e) disposées en coude par rapport au conduit latéral (39c).

5. Couvercle selon la revendication 3 ou 4, où à l'intérieur de chaque sous-chambre périphérique (6a) de ladite pluralité de sous-chambres
l'orifice (33) est entouré par une paroi de circonférence (34), à travers laquelle est réalisé le passage (34a) qui met en communication l'orifice (33) avec la sous-chambre (6a),
le conduit de connexion (38) se déploie le long de la sous-chambre (6a) jusqu'à l'extrémité opposée par rapport à l'orifice (33),
le parcours d'écoulement tortueux comprend un conduit tortueux (39f) et un compartiment côté orifice (39g) qui fait face à l'orifice (33) à travers le passage (34a) de la paroi de circonférence (34), ledit conduit tortueux se déployant entre l'orifice (33) et une chambre de sortie (39h) en communication d'écoulement avec le conduit d'échappement des gaz (52), où le conduit de connexion (38) débouche sur une extrémité du conduit tortueux (39f), l'autre extrémité du conduit tortueux (39f) étant reliée en coude au compartiment côté orifice (39g).

6. Couvercle selon l'une des revendications précédentes, où sur ledit élément de fermeture secondaire (4) est disposée une pluralité de bouchons (45) qui sont insérés dans les orifices de charge (33) du ledit élément principal (1) du couvercle,
où ledit élément de fermeture secondaire (4) comprend une plaque de support (44) qui supporte et relie entre eux lesdits bouchons, ladite plaque de support étant installée sur ledit élément de fermeture secondaire,
où chaque bouchon (45) est inséré dans un respectif orifice passant (46) de l'élément de fermeture secondaire (4), un organe annulaire d'étanchéité qui entoure ledit bouchon étant interposé entre une portion de base (45a) du ledit bouchon et l'élément de fermeture secondaire (4) et exerçant une étanchéité entre les deux, et
où ledit élément de fermeture secondaire présente, en correspondance de chacun des dits orifices passants (46), une pluralité d'organes élastiques de fixation (47) conformés en guise de dent, qui se déploient de l'élément de fermeture secondaire (4) et engagent ladite portion de base des bouchons pour retenir en direction axiale ladite plaque de support contre ledit élément de fermeture secondaire.
